Europäisches Patentamt

European Patent Office

Office européen des brevets

(11) Publication number: **0 227 607**
**A2**

(12) # EUROPEAN PATENT APPLICATION

(21) Application number: **86830325.6**

(22) Date of filing: **06.11.86**

(51) Int. Cl.⁴: **B 60 Q 1/36**

(30) Priority: **19.12.85 IT 2420785**

(43) Date of publication of application:
**01.07.87 Bulletin 87/27**

(84) Designated Contracting States:
**BE CH DE ES FR GB LI NL SE**

(71) Applicant: **Citterio, Franco**
**Via C. Colombo, 16**
**I-20040 Briosco (Milano) (IT)**

(72) Inventor: **Citterio, Franco**
**Via C. Colombo, 16**
**I-20040 Briosco (Milano) (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) A direction indicator system for a motor vehicle.

(57) A direction indicator system for a motor vehicle. having respective left and right front direction indicator lights and respective left and right rear direction indicator lights (1.2) and means (3) for selectively energising the left or right indicator lights at both the front and rear of the vehicle, is provided with rear indicator lights (1.2) which are formed in such a way that they can provide either an indication of an intended change in direction without an associated change in speed or an indication of an intended change in direction with an associated change in speed.

Fig. 1

EP 0 227 607 A2

## Description

"A direction indicator system for a motor vehicle"

The present invention relates generally to a direction indicator system for a motor vehicle. and particularly to a direction indicator system having means for providing a more precise indication to the following vehicles of the nature of an intended manoeuvre than is currently possible using conventional direction indicators.

Modern motor vehicles are equipped with a number of warning and indicator lights at the front and rear of the vehicle: these include position indicator lights (the so-called side lights) on which at the rear of the vehicle are referred to as tail lights; stop lights also known as brake lights, which are illuminated when the brakes are applied: direction indicator lights. usually amber in colour which, when selectively energised by the driver. flash to indicate an intended change in direction. and reversing lights. usually white, which are illuminated when reverse gear is engaged to indicate that the vehicle is moving in the reverse direction or to indicate the driver's intention to move in the reverse direction.

Known indicator systems have. however, various disadvantages in that the brake lights serve only to indicate that the vehicle is in the act of slowing whereas the direction indicator lights are able, if properly used. to warn in advance that the driver intends to change direction.

With such known systems it is not possible fully to indicate in advance the driver's intentions. For example there are many occasions when indication of an approaching change in direction does not unambiguously indicate whether a vehicle is merely pulling out to overtake or whether it is about to slow down and turn a corner. This could lead to accidents if following vehicles mistake the driver's intention and may be approaching too fast from behind to avoid a collision when slowing takes place.

Likewise. when a vehicle makes a preliminarily indication of a change in direction for the purpose of parking or when. for various reasons such as an obstruction which cannot be seen by drivers behind. it is necessary to change direction. such as to change lanes. and then immediately stop. the normal direction indicator lamps do not give a sufficiently complete and timely indication to the following vehicles of the full nature of the manoeuvre.

The present invention seeks to overcome the above-described disadvantages of the prior art by providing a motor vehicle indicator system capable of giving a more comprehensive advance indication of the nature of an intended manoeuvre.

According to the present invention. there is provided a direction indicator system for a motor vehicle. comprising respective left and right front direction indicator lights and respective left and right rear direction indicator lights and means for selectively energising the left or right indicator lights at both the front and rear of the vehicle. characterised in that the rear indicator lights are formed in such a way that they can provide an indication of an intended change in direction without an associated change in speed and an indication of an intended change in direction with an associated change in speed.

Embodiments of the invention defined above can help to prevent accidents. and in particular the so-called pile-up collisions in that drivers of following vehicles can be advised in good time of intended combined slowing and change of direction thanks to the indicator device of the invention. and thus will have time to slow and. if necessary. to change their path, also making a similar manoeuvre easier for the vehicles which follow them.

In practice, embodiments of the present invention may include a particular type of rear lamp having two compartments, together with a special indicator control lever having two different indication positions. a first for indicating an intended change in direction with an almost constant speed and a second for indicating a change in direction with an associated slowing or stopping.

One embodiment of the invention will now be more particularly described, by way of example, with references to the accompanying drawings, in which:

Figure 1 is a perspective rear view of a motor vehicle having an indicator system formed as an embodiment of the invention fitted thereto;

Figure 2 is a view from the driver's seat showing the steering wheel and direction indicator control lever. operable to actuate the direction indicator system of the invention; and

Figures 3 and 4 illustrate two different examples of use of the indicator system of the invention.

Referring now to the drawings it will be seen that in the indicator system of the invention each of two rear lamp clusters 1 and 2 has two indicator lamp compartments 1a,1b and 2a,2b so as to be able to house two lamp elements which can be illuminated alternately or contemporaneously. With this arrangement the conventional flashing illumination on one side of the vehicle of one only of the lamp compartments can indicate an intended change in direction without a substantial change in speed. whilst a new kind of indication, that is alternate or contemporaneous illumination of both compartments of the direction indicator lamp will indicate an intended change in direction with an associated change in speed, possibly a rapid slowdown or complete stop This indication will be made as soon as the direction indicator lever is moved and may be before the brakes are applied so that drivers following vehicles will thus be alerted earlier than is currently possible to speed changes which are about to be made.

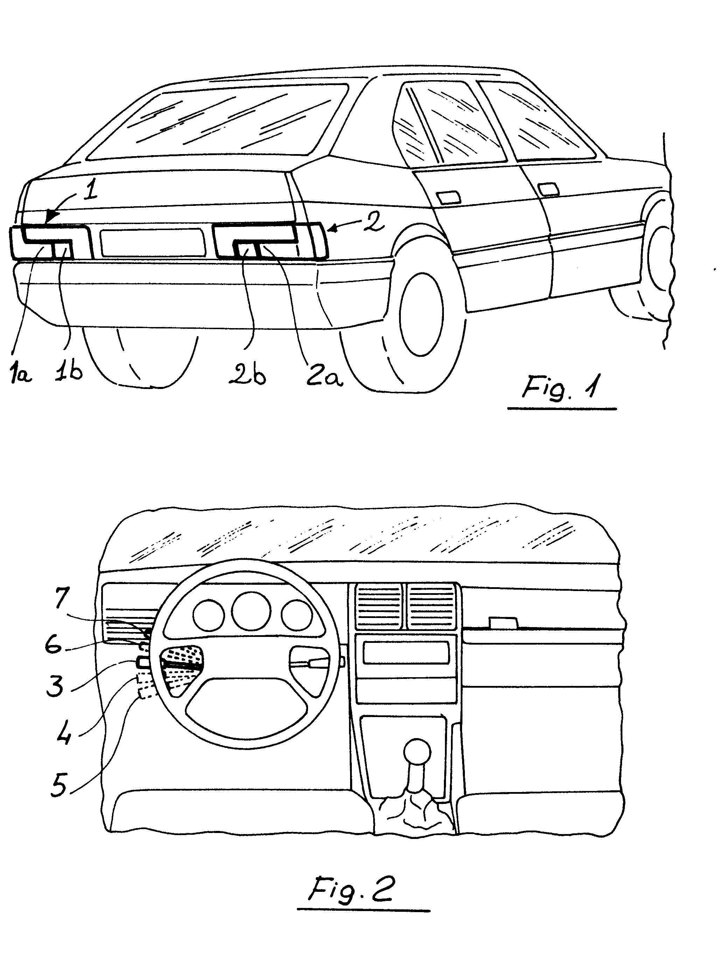

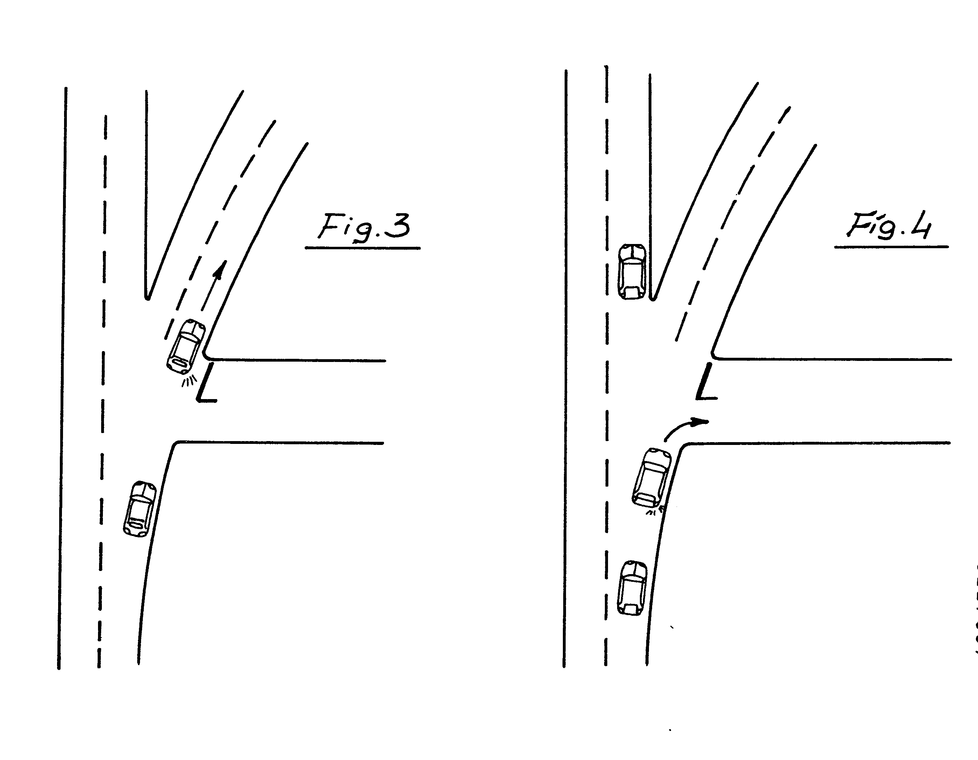

The electrical control system (not shown) can be operated in such a way as to cause one or both of the said elements 1a,1b or 2a,2b of lamps 1 and 2 to be illuminated according as it is desired to indicate. for example. simple overtaking or a change in direction followed by a subsequent braking. There may be provided flasher control means (not shown) by which the frequency at which the lamps 1a.1b or 2a.2b flash may be controlled to be different in the two different circumstances outlined above. Referring now to Figure 2 the control lever 3 for controlling the direction indicator lamps has five diferent operating positions as follows. namely: a central. neutral position 3 and. on one side of this. two positions 4 and 5 for causing illumination of indicator lamps 1 on the left hand side of the vehicle. and on the other side of the neutral position two positions 6 and 7 for causing illumination of the indicator lamps 2 on the right hand side of the vehicle. Of these positions. the two closest to the neutral position 3. that is the positions 4 and 6 respectively indicate an intended change in direction without a change in speed, and cause flashing illumination of only one of the two lamps of the associated set for example lamps 1a or 2a. whilst the end positions 5 and 7 are reserved for indicating an intended change in direction to the left or right. with an associate change in speed either to slow down or to stop entirely. and cause illumination of both lamp elements 1a and 1b for a turn to the left or both lamp elements 2a and 2b for a turn to the right.

## Claims

1. A direction indicator system for a motor vehicle. comprising respective left and right front direction indicator lights and respective left and right rear direction indicator lights (1.2) and means (3) for selectively energising the left or right indicator lights at both the front and rear of the vehicle. characterised in that the rear indicator lights (1.2) are formed in such a way that they can provide either an indication of an intended change in direction without an associated change in speed or an indication of an intended change in direction with an associated change in speed.

2. A direction indicator system according to Claim 1, characterised in that each of the said left and right rear lights (1.2) has two compartments (1a.1b,2a.2b) including a pair of illuminable elements which can be energised independently of one another such that illumination of one such element (1a.2a) of a pair indicates an intended change in direction without a substantial change in speed whilst illumination of both such elements of a pair indicates an intended change in direction with an associated change in speed.

3. A direction indicator system according to Claim 2. characterised in that the means (3) for controlling the energising of the indicator lamps includes means for causing alternating illumination of the elements of a pair (1a,1b:2a.2b) to indicate an intended change in direction with associated speed change.

4. A direction indicator system according to Claim 2. characterised in that. the means (3) for controlling energisation of the indicator lights includes means for causing the flashing illumination of both the elements of a pair together to indicate an intended change in direction with an associated change in speed.

5. A direction indicator system according to Claim 1. characterised in that it includes means for causing flashing illumination of the elements of a said pair at different frequencies according to whether it is intended to indicate a change in direction without a substantial change in speed or a change in direction with an associated speed change.

6. A direction indicator system according to any preceding Claim, characterised in that the means for controlling the energisation of the lamps includes a control level (3) able to assume five positions, namely: a central neutral position and. to one side of this central position, two positions controlling energisation of the left indicator lamps and. to the other side of this central position. two positions for actuating the right indicator lamps. the system including means for causing illumination of both the elements (1a.1b:2a.2b) of a pair thereof to indicate a change in direction with an associated change in speed when the control lever (3) is moved to one or the other of the extreme end positions.

0227607

Fig. 1

Fig. 2

0227607

Fig.4

Fig.3